# EUROPEAN PATENT APPLICATION

(11) **EP 1 577 894 A2**
(43) Date of publication of application: **21.09.2005**
(21) Application number: 05251686.1
(22) Date of filing: 18.03.2005
(51) Int. Cl.: G11B 33/02, G11B 33/06, G11B 33/10

(54) **Liquid crystal display device with built-in disk device**

(30) Priority: 19.03.2004 JP 2004080089
(71) Applicant: ORION ELECTRIC CO., Ltd., Fukui 915-8555 (JP)
(72) Inventor: Miura, Jun, c/o Orion Electric Co., Ltd., Takefu-city Fukui 915-8555 (JP)
(74) Representative: Paget, Hugh Charles Edward

(57) **Abstract**

The present invention provides a liquid crystal display device with a built-in disk device by adopting an arrangement of the disk device and the substrate designed so as to be able to reduce the size and thickness of the liquid crystal display device and share the substrate among liquid crystal display devices having different screen sizes.

In a 20-inch LCD 50, amain control substrate 14 is disposed substantially at the center of the lower part, substantially in parallel to an LCD module, a disk device 11 is disposed at the top on the left side and a disk device control substrate 12 is disposed alongside the disk device 11 so as to be substantially horizontal to the disk device 11 and a power supply circuit substrate 51 is disposed at the top on the right side so that it is possible to use the same disk device 11, the disk device control substrate 12 and the main control substrate 14 as those of a 14-inch LCD.

## Description

### BACKGROUND OF THE INVENTION

### Field of the Invention

The present invention relates to a liquid crystal display device with a built-in disk device, and more particularly, to a liquid crystal display device with a built-in disk device adopting an arrangement of the disk device and substrate designed so as to be able to reduce the size and thickness of the liquid crystal display device and share the substrate among liquid crystal display devices having different screen sizes.

A liquid crystal display device has advantages over a cathode ray tube display device in having a smaller (slimmer) size and weight and consuming less power, and is therefore becoming widespread and displacing the cathode ray tube display device. Such a trend is being spurred further by increases in size of display screens of liquid crystal display devices in recent years. Furthermore, with the emergence of a liquid crystal television with a built-in disk device which records/reproduces data to/from an optical disk medium such as DVD, the liquid crystal display device is displacing a conventional cathode ray tube television with a built-in VCR.

Conventional technologies of such a liquid crystal television with a built-in disk device are disclosed in Japanese Patent Laid-Open Publication No. 2001-332074 (Patent Document 1) and Japanese Patent Laid-Open Publication No. 2001-256768 (Patent Document 2), and the like.

As described above, an advantage of the liquid crystal display device is the ability to make an apparatus slimmer. Therefore, there has been a demand for a liquid crystal display device which will not prevent the slimming of the device even when a disk device is built in the liquid crystal display device, allow components (various substrates and the like) to be shared among products having different screen sizes and reduce manufacturing cost wherever possible.

### SUMMARY OF THE INVENTION

The object of the present invention is to provide a liquid crystal display device with a built-in disk device adopting an arrangement of the disk device and substrate designed so as to be able to reduce the size and thickness of the liquid crystal display device and share the substrate among liquid crystal display devices having different screen sizes.

The liquid crystal display device with a built-in disk device according to the first aspect of the invention is a liquid crystal display device with a built-in disk device comprising a disk device which reads and/or writes a signal from and/or to an optical disk medium, a disk device control substrate which controls and/or drives the disk device and controls a signal input and/or output to and/or from the disk device, an LCD module, a main control substrate which is provided with input and/or output terminals for an outside signal and performs control over the LCD module and processing, control, and the like on an video and/or audio signal, and a chassis which supports these components, wherein the disk device, the disk device control substrate, and the main control substrate are attached to one side of the chassis substantially in parallel to the LCD module, the disk device is disposed at the top on one side of the liquid crystal display device viewed from the front, the disk device control substrate is disposed alongside the disk device so as to be substantially horizontal (e.g. co-planar or parallel) to the disk device, and the main control substrate is disposed substantially at the center of the lower part of the liquid crystal display device viewed from the front so that the external input/output terminals are located at or extend at the lower part of a housing of the liquid crystal display device.

According to the above described arrangement, the disk device, the disk device control substrate, and the main control substrate are disposed on the chassis (on the same plane) substantially in parallel to the LCD module (that is, in vertical positions) and there is no area where these components overlap with each other in the depth direction of the liquid crystal display device.

The liquid crystal display device with a built-in disk device according to the second aspect of the invention is a liquid crystal display device with a built-in disk device comprising a disk device which reads and/or writes a signal from and/or to an optical disk medium, a disk device control substrate which controls and/or drives the disk device and controls a signal input and/or output to and/or from the disk device, an LCD module, a main control substrate which is provided with input and/or output terminals for an outside signal and performs control over the LCD module and processing, control, and the like on an video and/or audio signal, a power supply circuit substrate, and a chassis which supports these components, wherein the disk device, the disk device control substrate, the main control substrate, and the power supply circuit substrate are attached to one side of the chassis substantially in parallel to the LCD module, the disk device is disposed at the top on one side of the liquid crystal display device viewed from the front, the disk device control substrate is disposed alongside the disk device so as to be substantially horizontal (e.g. co-planar or parallel) to the disk device, the power supply circuit substrate is disposed at the top on the side opposite to the disk device, and the main control substrate is disposed substantially at the center of the lower part of the liquid crystal display device viewed from the front so that the external input/output terminals are located at or extend at the lower part of a housing of the liquid crystal display device.

According to the above described arrangement, the disk device, the disk device control substrate, the main control substrate, and the power supply circuit substrate are disposed on the chassis (on the same plane) substantially in parallel to the LCD module (that is, in vertical positions) and there is no area where these components overlap with each other in the depth direction of the liquid crystal display device.

The liquid crystal display device with a built-in disk device according to the third aspect of the invention is the liquid crystal display device with a built-in disk device according to the second aspect of the invention, wherein a power cord connected to the power supply circuit substrate is drawn out from the vicinity of the power supply circuit substrate at a height close to the center of the liquid crystal display device to the outer side of the housing of the liquid crystal display device.

According to the above described arrangement, the power cord connected to commercial power is the outer side of the housing of the liquid crystal display device up to the vicinity of the power supply circuit substrate and the length of the power cord inside the housing is short.

The liquid crystal display device with a built-in disk device according to the fourth aspect of the invention is the liquid crystal display device with a built-in disk device according to the first aspect of the invention, wherein the diagonal length of the screen of the LCD module is 14 inches.

The liquid crystal display device with a built-in disk device according to the fifth aspect of the invention is the liquid crystal display device with a built-in disk device according to the second or the third aspect of the invention,
wherein the diagonal length of the screen of the LCD module is 20 inches.

The liquid crystal display device with a built-in disk device according to the sixth aspect of the invention is the liquid crystal display device with a built-in disk device according to the fifth aspect of the invention, wherein the disk device, the disk device control substrate, and the main control substrate are identical to the disk device, the disk device control substrate, and the main control substrate provided for the liquid crystal display device with a built-in disk device according to the fourth aspect of the invention.

According to the above described arrangement, the 14-inch liquid crystal display device with a built-in disk device and the 20-inch liquid crystal display device with a built-in disk device have the identical disk device, the disk device control substrate and the main control substrate.

According to the liquid crystal display device with a built-in disk device according to the first aspect of the invention is a liquid crystal display device with a built-in disk device comprising a disk device which reads and/or writes a signal from/to an optical disk medium, a disk device control substrate which controls/drives the disk device and controls a signal input/output to/from the disk device, an LCD module, a main control substrate which is provided with input/output terminals for an outside signal and performs control over the LCD module and processing, control, and the like on an video/audio signal, and a chassis which supports these components, wherein the disk device, the disk device control substrate, and the main control substrate are attached to one side of the chassis substantially in parallel to the LCD module, the disk device is disposed at the top on one side of the liquid crystal display device viewed from the front, the disk device control substrate is disposed alongside the disk device so as to be substantially horizontal to the disk device, and the main control substrate is disposed substantially at the center of the lower part of the liquid crystal display device viewed from the front so as to draw the external input/output terminals from the lower part of a housing of the liquid crystal display device, so that the disk device, the disk device control substrate, and the main control substrate are disposed on the same plane substantially in parallel to the LCD module and there is no area where these components overlap with each other in the depth direction of the liquid crystal display device, thereby enabling to provide the liquid crystal display device as slim as possible. Furthermore, since the disk device and the disk device control substrate are disposed in substantially horizontal positions close to each other, it is easy to route flat cables and the like, which electrically connect the disk device and the disk device control substrate. Furthermore, it is possible to shorten the flat cable thereby reducing trouble caused by the flat cable contacting other components and influences of noise on the flat cable and the like.

According to the liquid crystal display device with a built-in disk device according to the second aspect of the invention is a liquid crystal display device with a built-in disk device comprising a disk device which reads and/or writes a signal from/to an optical disk medium, a disk device control substrate which controls/drives the disk device and controls a signal input/output to/from the disk device, an LCD module, a main control substrate which is provided with input/output terminals for an outside signal and performs control over the LCD module and processing, control, and the like on an video/audio signal, a power supply circuit substrate, and a chassis which supports these components, wherein the disk device, the disk device control substrate, the main control substrate, and the power supply circuit substrate are attached to one side of the chassis substantially in parallel to the LCD module, the disk device is disposed at the top on one side of the liquid crystal display device viewed from the front, the disk device control substrate is disposed alongside the disk device so as to be substantially horizontal to the disk device, the power supply circuit substrate is disposed at the top on the side opposite to the disk device, and the main control substrate is disposed substantially at the center of the lower part of the liquid crystal display device viewed from the front so as to draw the external input/output terminals from the lower part of a housing of the liquid crystal display device, so that the disk device, the disk device control substrate, the main control substrate, and the power supply circuit substrate are disposed on the same plane substantially in parallel to the LCD module and there is no area where these components overlap with each other in the depth direction of the liquid crystal display device, thereby enabling the liquid crystal display device as slim as possible.

According to the liquid crystal display device with a built-in disk device according to the third aspect of the invention is the liquid crystal display device with a built-in disk device according to the second aspect of the invention, wherein a power cord connected to the power supply circuit substrate is drawn out from the vicinity of the power supply circuit substrate at a height close to the center of the liquid crystal display device to the outer side of the housing of the liquid crystal display device, so that the power cord connected to commercial power is the outer side of the housing of the liquid crystal display device up to the vicinity of the power supply circuit substrate and the length of the power cord inside the housing is short, thereby enabling to reduce influences of noise generated by the power cord on the circuit on each substrate provided in the housing.

According to the liquid crystal display device with a built-in disk device according to the sixth aspect of the invention is the liquid crystal display device with a built-in disk device according to the fifth aspect of the invention, wherein the disk device, the disk device control substrate, and the main control substrate are identical to the disk device, the disk device control substrate, and the main control substrate provided for the liquid crystal display device with a built-in disk device according to the fourth aspect of the invention, so that the 14-inch liquid crystal display device with a built-in disk device and the 20-inch liquid crystal display device with a built-in disk device can have the identical disk device, the disk device control substrate, and the main control substrate, thereby enabling to reduce costs in designing, manufacturing, and managing parts and reduce manufacturing cost of the liquid crystal display device.

### BRIEF DESCRIPTION OF THE DRAWINGS

FIG. 1 is a perspective view of a liquid crystal display device with a built-in disk device according to Embodiment 1;
FIG. 2 is a rear view of the liquid crystal display device with a built-in disk device according to Embodiment 1;
FIG. 3 is a rear transparent view transparently illustrating part of the liquid crystal display device with a built-in disk device according to Embodiment 1;
FIG. 4 is an exploded perspective view illustrating part of the liquid crystal display device with a built-in disk device according to Embodiment 1;
FIG. 5 is a rear transparent view illustrating transparently part of the liquid crystal display device with a built-in disk device according to Embodiment 2;
FIG. 6 is a rear perspective view showing an enlarged view of a power cord pull-out part of the liquid crystal display device with a built-in disk device according to Embodiment 2; and
FIG. 7 is an exploded perspective view of part of the liquid crystal display device with a built-in disk device according to Embodiment 2.

### DETAILED DESCRIPTION OF THE PREFERRED EMBODIMENTS

Now preferred specific embodiments of the present invention will be explained with reference to the attached drawings below. The following embodiments are embodiments for implementing the present invention and are not intended to limit the present invention to within the scopes thereof.

### [Embodiment 1]

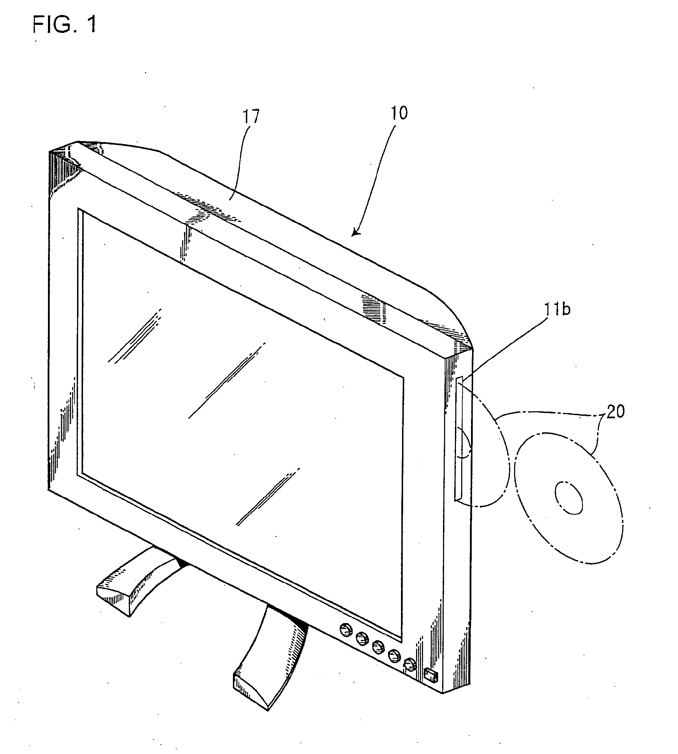

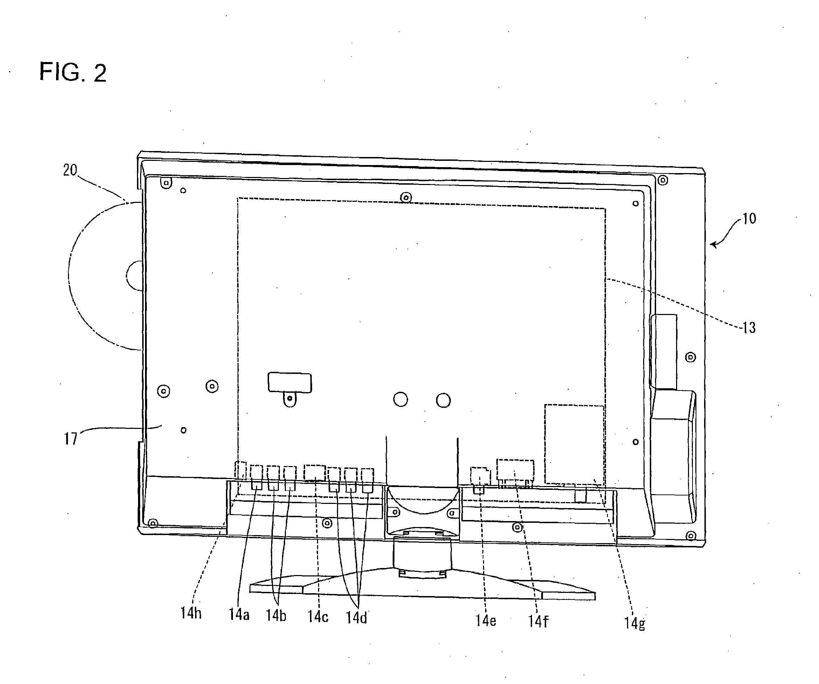

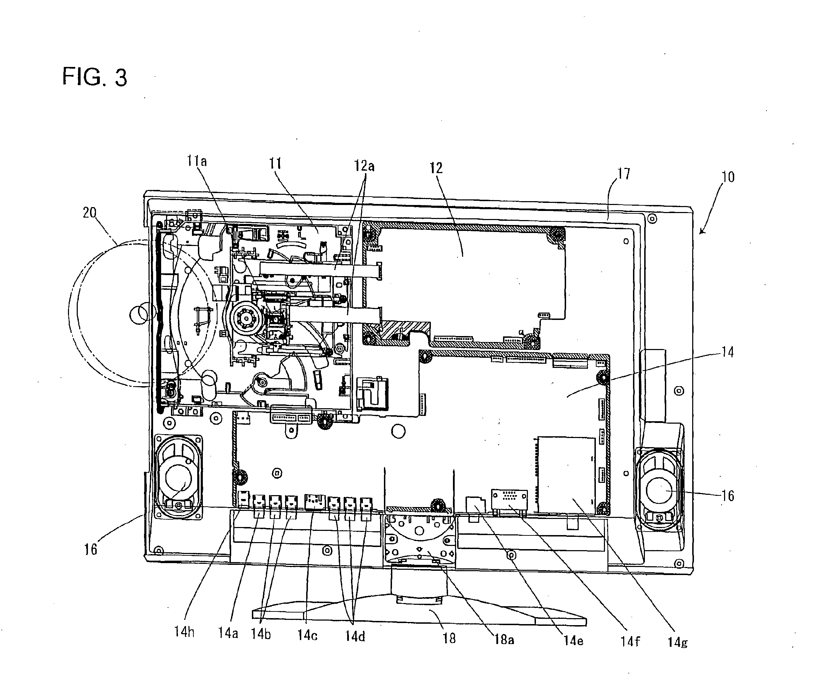

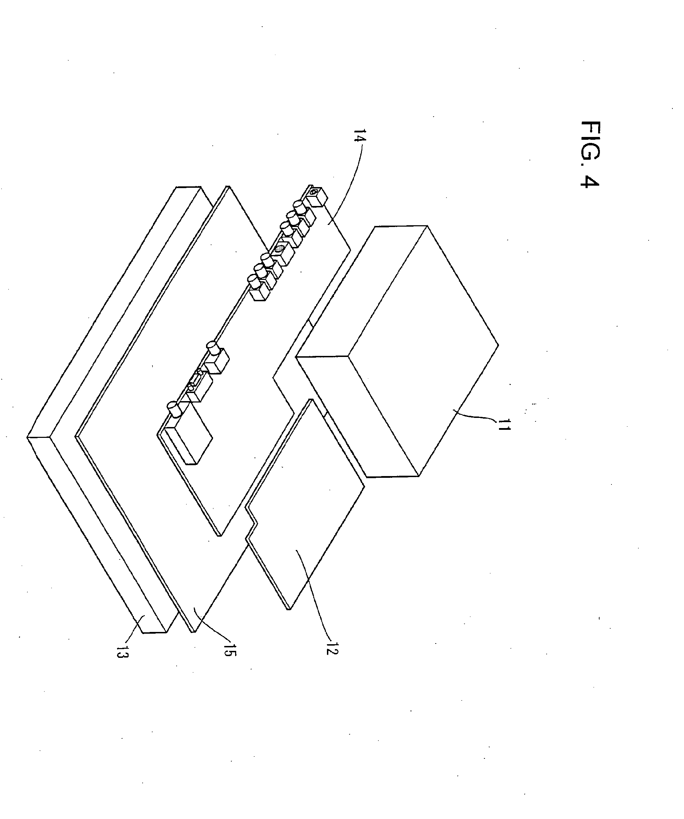

FIG. 1 is a perspective view of a liquid crystal display device with a built-in disk device according to this embodiment, FIG. 2 is a rear view of a liquid crystal display device with a built-in disk device according to this embodiment, FIG. 3 is a rear transparent view transparently illustrating part of FIG. 2 so as to clearly show the arrangement of components provided for the liquid crystal display device with a built-in disk device according to this embodiment, and FIG. 4 is an exploded perspective view for illustrating an outline of the structure of the liquid crystal display device with a built-in disk device according to this embodiment.

As shown in FIG. 3 and FIG. 4, the liquid crystal display device with a built-in disk device 10 (hereinafter referred to as "LCD 10") of this embodiment comprises a disk device 11, a disk device control substrate 12, an LCD module 13, a main control substrate 14, a chassis 15, speakers 16, and the like, inside a housing 17 and has a leg 18 for supporting the LCD 10 attached to the chassis 15 through a support section 18a.

The disk device 11 is provided with a pickup unit 11a which moves back and forth in the radius direction of an optical disk medium 20 to read and/or write a signal from/into the optical disk medium 20 and the disk device control substrate 12 is a substrate which controls a drive motor and the like, provided for the disk device 11 or controls a signal input/output to/from the pickup unit 11a. The LCD module 13 is provided with a liquid crystal panel which is a display device, a liquid crystal panel drive circuit which controls/drives the liquid crystal panel, a backlight which is a light source and an inverter circuit which controls/drives the backlight, and the like, and the diagonal length of the screen of the LCD 10 of this embodiment is 14 inches.

The main control substrate 14 controls the LCD module 13 and processes/controls an video/audio signal and the like, and is provided with a composite video terminal 14a, audio input terminals 14b, an S terminal (separate terminal) 14c, component video terminals 14d, a digital audio output terminal 14e, an analog RGB terminal 14f, which are all input/output terminals for signals from the outer side, and a tuner 14g. A power supply is connected to a DC input terminal 14h via an adapter (not shown) and the like, thereby inputting to the main control substrate 14. The main control substrate 14 and disk device control substrate 12 are shown simplified in the figures, but they are each constructed of a printed board on which a circuit pattern is printed and various electric/electronic parts are mounted.

As shown in FIG. 4, the LCD module 13 which is a component of the LCD 10 in the housing 17 is supported by being attached to the chassis 15, while the disk device 11, the disk device control substrate 12, and the main control substrate 14 are supported by being attached to the side of the chassis 15 opposite to the side to which the LCD module 13 is attached, substantially in parallel to the chassis 15 and the LCD module 13. As shown in FIG. 2 and FIG. 3, the main control substrate 14 is provided with various input/output terminals (composite video terminal 14a and the like) and the main control substrate 14 is disposed substantially at the center of the lower part of the LCD 10 viewed from the back so that these terminals can be drawn out from the lower part of the housing 17. The disk device 11 is disposed at the top on the left side of the LCD 10 viewed from the back so that an optical disk medium insertion opening 11b contacts the side of the housing 17 in consideration of the loading/unloading operability of the optical disk medium 20. The disk device control substrate 12 is disposed at a position substantially horizontal to the disk device 11, that is, alongside the disk device 11 so that the flexible flat cables 12a for connecting to the disk device 11 become straight and short. Though simplified or omitted in the figures, the main control substrate 14, the disk device control substrate 12, and the LCD module 13 are electrically connected and the disk device control substrate 12 and the LCD module 13 and the like receive power from the main control substrate 14 and input/output various signals (video signal, control signal, and the like) to/from each other.

According to the LCD 10 having the above described arrangement, the disk device 11, the disk device control substrate 12, and the main control substrate 14 are arranged on the same plane, substantially in parallel to the LCD module 13 and there is no area where these components overlap with each other in the depth direction of the LCD 10, thereby enabling to make the LCD 10 as slim as possible. Furthermore, since the disk device 11 adjoins the disk device control substrate 12, it is easy to route the flexible flat cables 12a and possible to reduce influences of noise on the flexible flat cables 12a.

### [Embodiment 2]

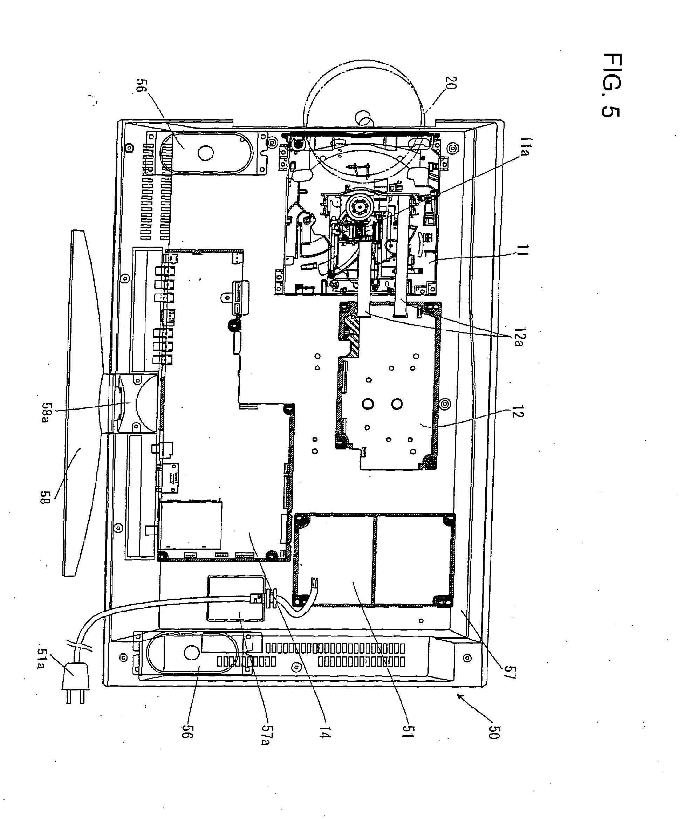

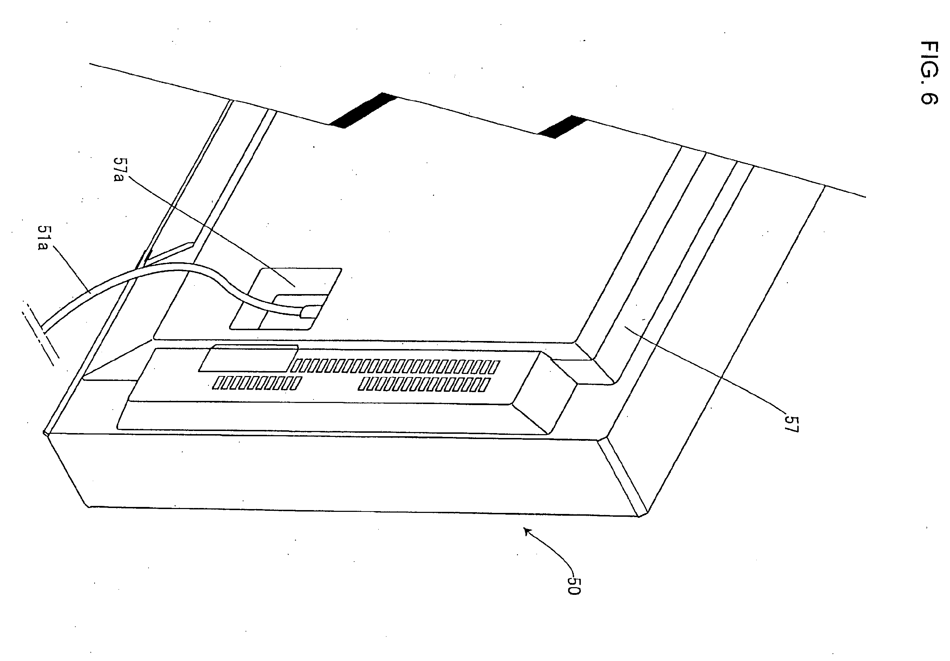

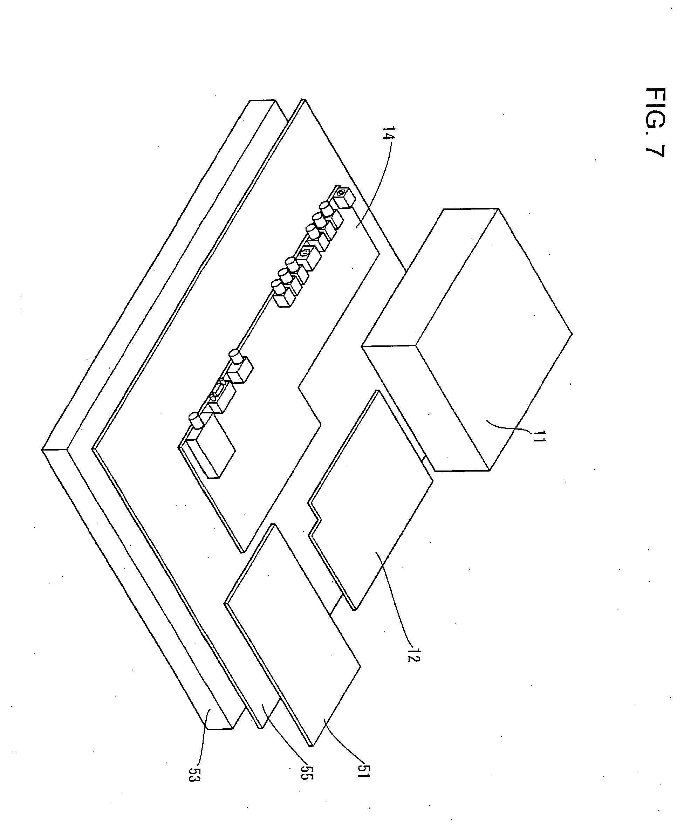

FIG. 5 is a rear transparent view transparently illustrating part of a liquid crystal display device with a built-in disk device according to this embodiment so as to clearly show the arrangement of components provided therein, FIG. 6 is a rear perspective view showing a power cord lead-out section of the liquid crystal display device, and FIG. 7 is an exploded perspective view to illustrate an outline of the structure of the liquid crystal display device.

As shown in FIG. 5 and FIG. 7, the liquid crystal display device with a built-in disk device 50 (hereinafter simply referred to as "LCD 50") of this embodiment comprises a disk device 11, a disk device control substrate 12, an LCD module 53, a main control substrate 14, a power supply circuit substrate 51, a chassis 55, speakers 56, and the like, inside a housing 57 and has a leg 58 for supporting the LCD 50 attached to the chassis 55 by a support section 58a.

The LCD module 53 is provided with a liquid crystal panel which is a display device, a liquid crystal panel drive circuit which controls/drives the liquid crystal panel, a backlight which is a light source and an inverter circuit which controls/drives the backlight, and the diagonal length of the screen of the LCD 50 of this embodiment is 20 inches.

The disk device 11, the disk device control substrate 12, and the main control substrate 14 provided for the 20-inch LCD 50 of this embodiment are identical to those for the 14-inch LCD 10 of Embodiment 1. The power supply circuit substrate 51 is designed to rectify, smooth, and perform step down of the supply voltage of commercial power and is provided with a power cord 51a connected to a power receptacle.

As shown in FIG. 7, the LCD module 53 which is a component of the LCD 50 in the housing 57 is supported by being attached to the chassis 55, while the disk device 11, the disk device control substrate 12, the main control substrate 14, and the power supply circuit substrate 51 are supported by being attached to the side of the chassis 55 opposite to the side to which LCD module 53 is attached, substantially in parallel to the chassis 55 and LCD module 53. The main control substrate 14 is disposed substantially at the center of the lower part of the LCD 50 viewed from the back so that the input/output terminals (composite video terminal 14a and the like) can be drawn out from the lower part of the housing 57. The disk device 11 is disposed at the top on the left side of the LCD 50 viewed from the back so that the optical diskmedium insertion opening 11b contacts the side of the housing 57. The disk device control substrate 12 is disposed alongside the disk device 11 so as to be substantially horizontal to the disk device 11. The power supply circuit substrate 51 is disposed at the top on the right side of the LCD 50 viewed from the back. Though simplified and omitted in the figures, the main control substrate 14 and the disk device control substrate 12, the LCD module 13, and the power supply circuit substrate 51 are electrically connected, wherein the main control substrate 14 receives power from the power supply circuit substrate 51, and the disk device control substrate 12, the LCD module 13, and the like receive power from the main control substrate 14, and input/output various signals (video signal, control signal, and the like) to/from each other.

As shown in FIG. 5 and FIG. 6, a power cord 51a connected to the power supply circuit substrate 51 is drawn out from a power cord lead-out section 57a of the housing 57 to the outer side of the housing 57. The power cord lead-out section 57a is disposed in the vicinity of the connection section between the power supply circuit substrate 51 and the power cord 51a.

According to the LCD 50 in the above described arrangement, the disk device 11, the disk device control substrate 12, the main control substrate 14, and the power supply circuit substrate 51 are arranged on the same plane substantially in parallel to the LCD module 53, and there is no area where these components overlap with each other in the depth direction of the LCD 50, thereby enabling to make the LCD 50 as slim as possible. Furthermore, since the disk device 11, the disk device control substrate 12, and the main control substrate 14 are identical to those of the 14-inch LCD, it is possible to reduce costs for designing, manufacturing and controlling these substrates and reduce the manufacturing cost of the liquid crystal display device. Moreover, since the relative positions of these substrates are identical or substantially identical, it is also possible to provide excellent routing of connecting cables and operability (the same manufacturing operation is applicable to the 14-inch LCD and the 20-inch LCD).

Furthermore, the power cord 51a connected to commercial power is the outer side of the housing 57 of the LCD 50 up to the vicinity of the power supply circuit substrate 51 and the length of the power cord 51a in the housing 57 is short, thereby enabling to reduce influences of noise produced from the power cord 51a on the circuit of each substrate provided inside the housing 57.

This embodiment has adopted the 20-inch LCD as an example, however, from the standpoint of sharing the disk device, the disk device control substrate and the main control substrate with the 14-inch LCD, it is self-evident that the embodiment is also applicable to a 15-inch, 17-inch, 17-inch wide LCDs, and the like. Furthermore, since the 14-inch LCD has portability, a DC power is supplied through an adapter in consideration of use in a vehicle. On the other hand, in the case of the 20-inch LCD, a current may be increased due to an increase of power consumption of the backlight and the like, and there may be a problem that heat is generated by the adapter, and therefore, a power supply circuit substrate is built-in. Both LCDs have different structures in this respect, however, when the 17-inch wide LCD comprises a power supply circuit substrate, all the disk device, the disk device control substrate, the main control substrate, and the power supply circuit substrate can have the same structure by sharing the use of the power supply circuit substrate.

## Claims

1. A liquid crystal display device with a built-in disk device comprising a disk device which reads and/or writes a signal from/to an optical disk medium, a disk device control substrate which controls/drives the disk device and controls a signal input/output to/from the disk device, an LCD module, a main control substrate which is provided with input/output terminals for an outside signal and performs control over the LCD module and processing, control, and the like on an video/audio signal, and a chassis which supports these components, wherein the disk device, the disk device control substrate, and the main control substrate are attached to one side of the chassis substantially in parallel to the LCD module, the disk device is disposed at the top on one side of the liquid crystal display device viewed from the front, the disk device control substrate is disposed alongside the disk device so as to be substantially horizontal to the disk device, and the main control substrate is disposed substantially at the center of the lower part of the liquid crystal display device viewed from the front so as to draw the external input/output terminals from the lower part of a housing of the liquid crystal display device.

2. A liquid crystal display device with a built-in disk device comprising a disk device which reads and/or writes a signal from/to an optical disk medium, a disk device control substrate which controls/drives the disk device and controls a signal input/output to/from the disk device, an LCD module, a main control substrate which is provided with input/output terminals for an outside signal and performs control over the LCD module and processing, control, and the like on an video/audio signal, a power supply circuit substrate, and a chassis which supports these components, wherein the disk device, the disk device control substrate, the main control substrate, and the power supply circuit substrate are attached to one side of the chassis substantially in parallel to the LCD module, the disk device is disposed at the top on one side of the liquid crystal display device viewed from the front, the disk device control substrate is disposed alongside the disk device so as to be substantially horizontal to the disk device, the power supply circuit substrate is disposed at the top on the side opposite to the disk device, and the main control substrate is disposed substantially at the center of the lower part of the liquid crystal display device viewed from the front so as to draw the external input/output terminals from the lower part of a housing of the liquid crystal display device.

3. The liquid crystal display device with a built-in disk device according to Claim 2, wherein a power cord connected to the power supply circuit substrate is drawn out from the vicinity of the power supply circuit substrate at a height close to the center of the liquid crystal display device to the outer side of the housing of the liquid crystal display device.

4. The liquid crystal display device with a built-in disk device according to Claim 1, wherein the diagonal length of the screen of the LCD module is 14 inches.

5. The liquid crystal display device with a built-in disk device according to Claim 2 or 3, wherein the diagonal length of the screen of the LCD module is 20 inches.

6. The liquid crystal display device with a built-in disk device according to Claim 5, wherein the disk device, the disk device control substrate, and the main control substrate are identical to the disk device, the disk device control substrate, and the main control substrate provided for the liquid crystal display device with a built-in disk device according to Claim 4.
